(19) Europäisches Patentamt
European Patent Office
Office européen des brevets

(11) **EP 4 025 875 B1**

(12) **EUROPÄISCHE PATENTSCHRIFT**

(45) Veröffentlichungstag und Bekanntmachung des Hinweises auf die Patenterteilung:
**01.11.2023  Patentblatt 2023/44**

(21) Anmeldenummer: **20768538.9**

(22) Anmeldetag: **03.09.2020**

(51) Internationale Patentklassifikation (IPC):
**G01D 5/14** *(2006.01)*        **G01D 5/245** *(2006.01)*

(52) Gemeinsame Patentklassifikation (CPC):
**G01D 5/2452; B60L 3/0038; F16C 19/52; F16H 55/24; G01D 5/24476; G01M 13/04;** F16C 19/26; F16C 2370/00; G01D 2205/90

(86) Internationale Anmeldenummer:
**PCT/EP2020/074565**

(87) Internationale Veröffentlichungsnummer:
**WO 2021/043886 (11.03.2021 Gazette 2021/10)**

(54) **VERFAHREN UND SYSTEM ZUR BESTIMMUNG VON POSITIONSVERLAGERUNGEN**

METHOD AND SYSTEM FOR DETERMINING POSITION DISPLACMENTS

MÉTHODE ET SYSTÈME POUR DÉTERMINER DÉPLACEMENTS DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2019  DE 102019123951**

(43) Veröffentlichungstag der Anmeldung:
**13.07.2022  Patentblatt 2022/28**

(73) Patentinhaber: **Universität Rostock 18051 Rostock (DE)**

(72) Erfinder: **FALKENSTEIN, Jens-Werner 73434 Aalen (DE)**

(74) Vertreter: **Frey, Sven Holger Lorenz & Kollegen Patentanwälte Partnerschaftsgesellschaft mbB Alte Ulmer Strasse 2 89522 Heidenheim (DE)**

(56) Entgegenhaltungen:
EP-A1- 1 526 362       DE-A1-102012 215 081
US-B2- 10 274 342

**Beschreibung**

Die Erfindung betrifft ein Verfahren zur Bestimmung von Positionsverlagerungen in wenigstens zwei unterschiedlichen Raumrichtungen zwischen einem ersten Element und einem zweiten Element, welche relativ zueinander beweglich sind.

Die Erfindung betrifft ebenfalls ein System zur Bestimmung von Positionsverlagerungen in wenigstens zwei unterschiedlichen Raumrichtungen zwischen einem ersten Element und einem zweiten Element, welche relativ zueinander beweglich sind.

In Antriebssystemen, insbesondere im Bereich der Fahrzeugtechnik sowie der allgemeinen Antriebstechnik ist die Messung bzw. Bestimmung von Drehmomenten und Kräften, insbesondere im Zusammenhang mit der funktionalen Sicherheit notwendig. Die neue ISO-Norm 26262 beschreibt die Anforderungen an elektrische/elektronische/programmier-bare elektronische Systeme in Kraftfahrzeugen. Mit zunehmender Elektrifizierung und dem Einsatz der Drive-by-Wire-Technologie erhöht sich die Gefahr, dass Fehler in der Steuerung zur unerwünschten Umsetzung von Größen, insbesondere Drehmomenten, im Antriebssystem führen. Dies kann schwerwiegende Unfälle zur Folge haben. Entsprechendes gilt selbstverständlich auch für Fehler in der Verkabelung oder in der Leistungselektronik.

Die fehlerhafte Umsetzung einer Größe im Antriebsstrang muss schnell und sicher erkannt werden. Eine sicherheitsbezogene Steuerung muss Gegenmaßnahmen ergreifen um die Beherrschbarkeit des Kraftfahrzeugs für den Fahrer sicherzustellen.

Mechanische Kräfte oder Drehmomente werden aus Kostengründen zumeist nicht direkt gemessen. Auch die begrenzte Robustheit entsprechender Messsysteme gegenüber den Betriebsbedingungen im Kraftfahrzeug mit Verschmutzungen, Vibrationen und großem Temperaturbereich sowie die limitierte Lebensdauer dieser Messsysteme sprechen gegen deren Einsatz. Auch im Rahmen eines Condition-Monitorings für beispielsweise Industrie- oder Schiffsgetriebe sind derartige Messungen erforderlich.

Die DE 10 2016 116 113 A1 offenbart ein Lager und ein Verfahren zur Verschleißüberwachung und/oder Lastmessung. Es wird ein Lager, insbesondere ein Wälzlager, mit einem feststehenden ersten Lagerring und einem relativ zu dem ersten Lagerring um eine Längsachse drehbar angeordneten zweiten Lagerring vorgeschlagen, wobei das Lager wenigstens einen ersten Sensor und einen zweiten Sensor aufweist. Durch die Verwendung von zwei unterschiedlichen messenden Sensoren kann eine radiale relative Verschiebung der Lagerringe von einer axialen Relativverschiebung eindeutig unterschieden werden. Somit können in gleicher Weise auch auf das Lager wirkende Lasten getrennt nach axial und radial wirkenden Kräften detektiert werden.

In der DE 11 2015 005 624 T5 ist ein Lastbestimmungssystem für ein Wälzlager angegeben. Das Lager umfasst einen ersten Ring und einen zweiten Ring als einen Innenring und einen Außenring, wobei entweder der erste oder zweite Ring der Innenring sein kann, wobei der andere Ring der Außenring ist. Das System umfasst zumindest zwei Magnet-sensoren, die an dem ersten Ring angebracht sind, um mit einem Zielring zu wechselwirken, der an dem zweiten Ring angebracht ist. Weiterhin umfasst das System eine Signalverarbeitungseinheit, die dazu ausgelegt ist, die Magnetsensorausgabe des zumindest einen Magnetsensors zu empfangen, wobei die Signalverarbeitungseinheit dazu ausgelegt ist, zumindest axiale Kräfte, die auf das Lager wirken, basierend auf der Amplitude der Magnetsensorausgabe, zu bestimmen. Es wird des Weiteren vorgeschlagen, dass die Signalverarbeitungseinheit dazu ausgelegt ist, einen Mittelwert der Ausgaben der zumindest zwei Magnetsensoren zu berechnen und einen Logarithmus eines Verhältnisses der Mittelwerte zu berechnen, um eine Last, die auf das Lager wirkt, zu bestimmen. Des Weiteren ist angedacht, ein Mittelwertbilden der Amplitude über eine Umdrehung vorzunehmen. Dies soll auch eine Unwucht und Befestigungsungenauigkeiten des Magnetrings kompensieren.

Ein Fehlerbild bei Elektrofahrzeugen ist allerdings eine vom Fahrer nicht gewollte Fahrzeugbewegung, insbesondere bei zunächst stillstehendem Fahrzeug. Diese kann infolge eines ungewollten Drehmoments, z. B. bei einem Fehlerfall in einem Antriebsaggregat entstehen. Ein ungewolltes Drehmoment muss zeitnah erkannt und von den Algorithmen der funktionalen Sicherheit unterbunden werden. Eine Mittelwertbildung über eine Umdrehung gemäß der DE 11 2015 005 624 würde zu lange dauern verbunden mit einer zu großen Fahrzeugbewegung.

Aus dem Stand der Technik sind Messsysteme bekannt, welche ein Absolutsignal erzeugen, beispielsweise für einen Verdrehwinkel oder eine Position. Dabei werden auf einen Zielring oder einen Linearmaßstab mehrere Spuren aufgebracht, welche nebeneinander angeordnet sind. Ein Luftspalt zwischen Sensor und Zielring bzw. Linearmaßstab besitzt für alle Spuren dieselbe Orientierung. Das Absolutsignal wird mittels Mehrspurbinärmuster, Mehrspur-Gray-Muster, Pseudo-Zufallscode, insbesondere mit einer zusätzlichen Inkrementalspur zur Feininterpolation oder einer Noniusspur (zwei Spuren mit unterschiedlichen Polzahlen) erzeugt.

Die DE 10 2012 215 081 A1 offenbart einen Lenkmoment-Lenkwinkelsensor der ein Lenkmomentsensormodul und ein Lenkwinkelsensormodul umfasst, wobei das Lenkmomentsensormodul mit einem magnetischen Wirkprinzip arbeitet und dabei einen ersten magnetischen Encoder und zumindest ein erstes Magnetfeldsensorelement aufweist, wobei das Lenkwinkelsensormodul zumindest ein zweites und ein drittes Magnetfeldsensorelement aufweist, wobei das zweite Magnetfeldsensorelement das magnetische Feld des ersten magnetischen Encoders, also des magnetischen Encoders des Lenkmomentsensormoduls, direkt oder indirekt erfasst und wobei das dritte Magnetfeldsensorelement das magnetische Feld eines zusätzlichen zweiten magnetischen Encoders erfasst.

Die US 10 274 342 B2 offenbart eine rotierende Erfassungsvorrichtung die eine Basis, ein rotierendes Element, mindestens einen Satz magnetischer Elemente, mindestens einen Satz magnetischer Erfassungselemente und eine Verarbeitungseinheit umfasst. Der Magnetelementsatz ist an dem rotierenden Element angeordnet und umfasst ein axiales Magnetelement und ein radiales Magnetelement. Der Satz magnetischer Erfassungselemente ist auf der Basis angeordnet und umfasst ein axiales magnetisches Erfassungselement und ein radiales magnetisches Erfassungselement. Wenn das rotierende Element relativ zu der Basis gedreht wird, werden eine magnetische Variation relativ zu dem axialen magnetischen Element und eine magnetische Variation relativ zu dem radialen magnetischen Element jeweils durch das axiale magnetische Erfassungselement und das radiale magnetische Erfassungselement erfasst, um so ein Sensorsignal zu erzeugen. Die Verarbeitungseinheit ist dazu ausgelegt, um eine Rotationsgeschwindigkeit, einen Belastungswert und einen Auslenkungswert zu erhalten. Zusätzlich wird auch ein Rotationserfassungsverfahren bereitgestellt.

Die EP 1 526 362 A1 offenbart eine Lageranordnung bestehend aus einem Wälzlager mit einem drehbaren Laufbahnelement und einem stationären Laufbahnelement. Diese Lageranordnung umfasst auch ein zu erfassendes Element, das von dem Laufbahnelement getragen wird und eine magnetische Eigenschaft aufweist, die sich zyklisch in einer Umfangsrichtung des zu erfassenden Elements ändert und einen Zyklus aufweist, der mit einer vollständigen Drehung des Laufbahnelements korrespondiert, eine magnetische Sensoreinheit, die von dem Laufbahnelement in gegenüberliegender Beziehung zu dem zu erfassenden Element getragen wird, und eine magnetische Erfassungsschaltung zum Zuführen einer elektrischen Energie zu der Einheit und zum Verarbeiten eines Ausgangssignals von der Einheit, um eine Ausgabe an eine externe Schaltung bereitzustellen. Die magnetische Charakteristik des zu erfassenden Elements stellt eine im Wesentlichen sinusförmige Wellenform dar, die steiler ansteigt und abfällt als eine sinusförmige Wellenform an einem Nulldurchgangspunkt.

Ausgehend davon liegt der vorliegenden Erfindung die Aufgabe zugrunde, ein Verfahren zur Bestimmung von Positionsverlagerungen der eingangs erwähnten Art zu schaffen, welche die Nachteile des Standes der Technik vermeidet, insbesondere geometrische und magnetische Ungenauigkeiten der eingesetzten Sensoren bzw. der zugehörigen Referenzflächen korrigiert und/oder bereits im Stillstand oder nach geringer Bewegung eine Ermittlung von verlässlichen Messwerten des Drehmoments und/oder der Kraft in einem Antriebssystem ermöglicht.

Diese Aufgabe wird erfindungsgemäß durch ein Verfahren mit den in Anspruch 1 genannten Merkmalen gelöst.

Erfindungsgemäß wird ein Verfahren zur Bestimmung von Positionsverlagerungen in wenigstens zwei unterschiedlichen Raumrichtungen zwischen einem ersten Element und einem zweiten Element vorgeschlagen, welche relativ zueinander beweglich sind, mit wenigstens zwei berührungslos messenden Sensoren, welche in den wenigstens zwei unterschiedlichen Raumrichtungen zu wenigstens zwei mit dem zweiten Element fest verbundenen Maßverkörperungen beabstandet angeordnet sind, wobei Sensorflächen der wenigstens zwei Sensoren den wenigstens zwei Maßverkörperungen in der jeweiligen Raumrichtung gegenüberliegen und diese erfassen, wobei:

- die wenigstens zwei Sensoren die wenigstens zwei Maßverkörperungen abtasten und in Wechselwirkung mit den wenigstens zwei Maßverkörperungen Ausgangssignale erzeugen, mit welchen in Kombination eine absolute Position des zweiten Elements bestimmt wird, welche mit einer linearen Bewegung in einer weiteren Raumrichtung oder mit einer Drehbewegung verbunden ist, und
- wobei ferner mittels der Ausgangssignale der wenigstens zwei Sensoren Werte bestimmt werden, welche den Abstand zwischen dem jeweiligen Sensor und der entsprechenden Maßverkörperung des zweiten Elements in der zugehörigen Raumrichtung charakterisieren, welche in Abhängigkeit von der ermittelten absoluten Position des zweiten Elements korrigiert werden, und aus welchen die Positionsverlagerung des zweiten Elements relativ zu dem ersten Element in der jeweiligen Raumrichtung bestimmt wird.

Durch die erfindungsgemäße Bestimmung von Positionsverlagerungen in wenigstens zwei unterschiedlichen Raumrichtungen bzw. in einer ersten und in einer zweiten Raumrichtung zwischen einem ersten Element und einem zweiten Element, welche relativ zueinander beweglich sind, kann, insbesondere unter Berücksichtigung von Elastizitäten, insbesondere Werkstoffelastizitäten auf Drehmomente und/oder Kräfte zwischen den beiden Elementen geschlossen werden. Des Weiteren wird eine absolute Position des zweiten Elements bestimmt, welche mit einer linearen Bewegung in einer weiteren Raumrichtung oder mit einer Drehbewegung verbunden ist. Erfindungsgemäß wird die Positionsverlagerung in derjeweiligen Raumrichtung aus Werten ermittelt, welche den Abstand zwischen den jeweiligen Sensoren und der entsprechenden Maßverkörperung in der zugehörigen Raumrichtung charakterisieren. In sehr vorteilhafter Weise werden diese Werte durch die ermittelte Absolutlage bzw. den ermittelten Absolutdrehwinkel korrigiert um Ungenauigkeiten, insbesondere Fertigungsungenauigkeiten oder infolge von Wärmedehnungen, Justageprobleme der Maßverkörperungen oder Sensor- bzw. Geberfehler zu beseitigen.

Die den Abstand zwischen dem jeweiligen Sensor und der entsprechenden Maßverkörperung des zweiten Elements in der zugehörigen Raumrichtung charakterisierenden Werte können durch eine Amplitude des Ausgangssignals des jeweiligen Sensors bestimmt werden. Der Abstand bzw. die jeweilige Dicke des Luftspaltes kann durch die Amplitude der Sensorsignale bestimmt werden. Wird mit den Sensoren beispielsweise ein Magnetfeld abgetastet, so ändert sich die Rückkopplung in Abhängigkeit des Abstandes zwischen Sensor und Maßverkörperung bzw. Sensorring. Somit kann mit ohnehin bereits vorhandenen Mitteln zur Bestimmung der absoluten Position des zweiten Elements auch eine Bestimmung der Positionsverlagerungen erfolgen.

Die wenigstens zwei Maßverkörperungen können derart ausgelegt sein, dass sie in Verbindung miteinander Mittel zur Bestimmung der absoluten Position des zweiten Elements bilden.

Die wenigstens zwei Maßverkörperungen können in Verbindung miteinander ein Binärmuster, ein Gray-Muster, einen Pseudo-Zufallscode, insbesondere mit einer zusätzlichen Inkrementalspur zur Feininterpolation, oder eine Noniusspur bilden.

Dadurch kann ein Absolutsignal, insbesondere für einen Verdrehwinkel oder eine Position erzeugt werden. Dabei werden beispielsweise auf einen Zielring oder einen Linearmaßstab als Maßverkörperung mehrere Spuren aufgebracht, welche nahe beieinander angeordnet sind. Ein Luftspalt zwischen Sensor und Maßverkörperung bzw. Zielring oder Linearmaßstab kann für mindestens zwei Spuren eine unterschiedliche Orientierung besitzen, wobei die Sensorflächen den Spuren in unterschiedlichen Raumrichtungen gegenüber liegen können. Das Absolutsignal kann mittels eines Mehrspurbinärmusters, eines Mehrspur-Gray-Musters, eines Pseudo-Zufallscodes, insbesondere mit zusätzlicher Inkrementalspur oder einer Noniusspur, d. h. mit zwei Spuren mit unterschiedlichen Polzahlen, erzeugt werden.

Die wenigstens zwei Sensoren können mit dem ersten Element und/oder mit einer feststehenden Struktur verbunden sein.

Aus den ermittelten Positionsverlagerungen des zweiten Elements relativ zu dem ersten Element können Kräfte und/oder Drehmomente, welche zwischen dem ersten Element und dem zweiten Element wirken, bestimmt werden.

Aus den ermittelten Positionsverlagerungen des zweiten Elements relativ zu dem ersten Element in den wenigstens zwei unterschiedlichen Raumrichtungen können jeweils redundant Werte von Drehmomenten, deren Wirkungen beispielsweise durch Zahn- oder Zugmittelkräfte die Positionsverlagerungen hervorrufen oder weitere externe Kräfte, welche auf das zweite Element wirken, ermittelt werden. Die Kräfte und/oder Drehmomente können insbesondere mittels entsprechender Modelle bestimmt werden. Alternativ oder zusätzlich können, wenn die wenigstens zwei unterschiedlichen Raumrichtungen als unterschiedliche Berechnungspfade verwendet werden, diese miteinander plausibilisiert werden, um wenigstens zwei redundante Kanäle vorzugsweise zur Fehlerdetektion bei einer zu großen Abweichung der redundanten Werte zu erhalten. Auch in diesem Fall können wieder entsprechende Modelle zur Bestimmung der Drehmomentwerte herangezogen werden. Alternativ oder zusätzlich können die wenigstens zwei unterschiedlichen Berechnungspfade dazu verwendet werden, um mittels eines Vergleichs der berechneten Werte die weiteren externen Kräfte zu bestimmen, welche auf das zweite Element wirken und zusätzliche Positionsverlagerungen hervorrufen. Zur Bestimmung der Drehmomentwerte und der weiteren externen Kräfte können ebenfalls entsprechende Modelle herangezogen werden.

Darüber hinaus kann ein resultierendes Drehmoment, insbesondere durch eine vorzugsweise gewichtete Mittelwertbildung, aus den redundant ermittelten Drehmomentwerten gebildet werden. Dadurch wird eine genauere Bestimmung des Drehmoments ermöglicht.

Das erfindungsgemäße Verfahren kann bei einem Lager, insbesondere einem Wälzlager eingesetzt werden, wobei als das erste Element ein vorzugsweise feststehender erster Lagerring des Lagers und als das zweite Element ein relativ zu dem ersten Lagerring um eine Längsachse drehbar angeordneter zweiter Lagerring des Lagers verwendet wird.

Wenigstens zwei Sensoren können mit einem ersten Ring eines Lagers verbunden bzw. daran untergebracht sein, wobei wenigstens zwei Maßverkörperungen bzw. Zielringe mit einem zweiten Ring des Lagers verbunden sind. Ebenso können die wenigstens zwei Sensoren mit einem Gehäuse bzw. einer Struktur verbunden sein, welches den ersten Ring des Lagers aufnimmt, wobei die Zielringe oder Maßverkörperungen mit einer Welle verbunden sind, welche den zweiten Ring des Lagers aufnimmt. Eine Anordnung der wenigstens zwei Maßverkörperungen und der wenigstens zwei Sensoren außerhalb eines ölführenden Gehäuses kann sinnvoll sein, beispielsweise bei Zahnradgetrieben, um eine Störung von optischen Sensoren durch das Öl oder von magnetischen Sensoren durch magnetischen oder ferromagnetischen Abrieb im Öl zu vermeiden.

Als die ermittelte absolute Position des zweiten Elements kann ein absoluter Verdrehwinkel des zweiten Lagerrings verwendet werden.

Als eine erste Raumrichtung kann eine radiale Richtung und als eine zweite Raumrichtung kann eine axiale Richtung bezogen auf die Längsachse des zweiten Lagerrings verwendet werden.

Ein aktuelles Betriebslagerspiel und/oder Massenkräfte infolge von Beschleunigungen können bei der Bestimmung der Kräfte, welche zwischen dem ersten Lagerring und dem zweiten Lagerring wirken und/oder der Drehmomente, deren Wirkungen die Kräfte hervorrufen, berücksichtigt werden.

Die Ermittlung von zwischen den beiden Lagerringen wirkenden Kräften bzw. Momenten aus den relativen Verlagerungen bzw. Verkippungen der Lagerringe kann die Kenntnis des Betriebslagerspiels erfordern. Dieses ist abhängig von der Lagerluftklasse (nominelle Lagerluft) des Lagers, den Passungen an den Lagersitzen für die Lagerringe, sowie Verschleiß und Wärmeausdehnungen. Die nominelle Lagerluft sowie die Passungen variieren von Exemplar zu Exemplar, ändern sich jedoch nicht oder nur langsam über die Zeit, beispielsweise durch Einlaufen oder Setzerscheinungen. Auch der Verschleiß ändert sich zeitlich nur langsam. Es wird vorgeschlagen, das aktuelle Betriebslagerspiel sowie die geometrische Mittellage des Lagers bei einem Nulldurchgang (= Vorzeichenwechsel) der Lagerlast zu detektieren. Die so ermittelten Werte können basierend auf einer gemessenen aktuellen Lagertemperatur korrigiert werden, die sich auch kurzfristig ändern kann. Damit lässt sich das aktuelle Betriebslagerspiel gut erfassen, auch wenn ein Nulldurchgang der Lagerlast bereits vor längerer Zeit und bei anderer Lagertemperatur stattgefunden hat. Bei den Massenkräften infolge von Beschleunigungen kann es sich beispielsweise um Gehäusebewegungen infolge von Fahrstößen (z. B. durch Schlaglöcher) handeln, welche gemessen und korrigiert bzw. bei welchen der betreffende Frequenzbereich herausgefiltert werden kann.

Vorteilhaft ist es, wenn ein erster Wert eines Drehmoments, welches auf das Lager wirkt, aus einer axialen Lagerkraft, und ein zweiter Wert des Drehmoments aus einer radialen Lagerkraft, gebildet werden. Die axiale Lagerkraft und die radiale Lagerkraft können von dem Lager aufgenommen und durch das Drehmoment hervorgerufen werden. Die axiale Lagerkraft kann im Wesentlichen oder vollständig anhand eines Lagermodells aus einem den Abstand zwischen dem Sensor und der entsprechenden Maßverkörperung des zweiten Lagerrings in der axialen Raumrichtung charakterisierenden Wert gebildet werden. Die radiale Lagerkraft kann analog im Wesentlichen oder vollständig anhand eines Lagermodells aus einem den Abstand zwischen dem Sensor und der entsprechenden Maßverkörperung des zweiten Lagerrings in der radialen Raumrichtung charakterisierenden Wert gebildet werden.

Zahnradgetriebe sind meist mit einer Schrägverzahnung ausgeführt. Infolge eines Antriebsdrehmoments und der Wirkung der Schrägverzahnung entstehen daher eine Axial- sowie eine Radialkraft, die von der Lagerung aufgenommen wird und zu einer relativen Verschiebung der beiden Lagerringe zueinander in axialer und radialer Richtung führt. Erfindungsgemäß kann vorgesehen sein, dass das Antriebsdrehmoment aus der Axialkraft bestimmt wird, die überwiegend aus der axialen Verschiebung ermittelt werden kann. Zusätzlich kann das Antriebsdrehmoment aus der Radialkraft bestimmt werden, die überwiegend aus der radialen Verschiebung ermittelt werden kann. Es stehen somit zwei redundante Kanäle zur Ermittlung des Antriebsdrehmoments zur Verfügung, die im fehlerfreien Fall wenigstens annähernd denselben Wert für das ermittelte Antriebsdrehmoment liefern sollten.

Insbesondere zur Fehlerdetektion kann eine Abweichung zwischen dem ersten und dem zweiten Drehmomentwert bestimmt werden. Ein Fehler kann erkannt werden, wenn die Abweichung zwischen dem ersten und dem zweiten Drehmomentwert über einem vorgegebenen, vorzugsweise betriebszustandsabhängigen Schwellwert liegt.

Bei einer zu großen Abweichung (größer als eine betriebszustandsabhängige Schwelle) kann auf einen Fehler in der Sensorik, der Auswertung oder der Lagerung geschlossen werden und gegebenenfalls eine Abschaltung des Antriebssystems oder ein Betrieb mit reduzierter Antriebsleistung bzw. reduziertem Antriebsmoment eingeleitet werden.

Das erfindungsgemäße Verfahren kann bei einem eine, insbesondere elektrifizierte Antriebsanordnung aufweisenden Fahrzeug verwendet werden, wobei das Lager ein Teil der Antriebsanordnung ist und eine Getriebewelle der Antriebsanordnung den zweiten Lagerring aufnimmt, und wobei ein resultierendes Antriebsdrehmoment durch eine, insbesondere betriebszustandsabhängige gewichtete Mittelwertbildung des ersten und zweiten Drehmomentwerts bestimmt wird.

Wenigstens einer der Sensoren kann als Magnetsensor ausgeführt sein. Des weiteren können auch optische Sensoren zum Einsatz kommen, bei denen die jeweilige Dicke des Luftspaltes durch die Amplitude der Sensorsignale, eine Laufzeit eines Lichtstrahls, eine Phasenlage eines reflektierten Lichtstrahls und/oder mittels Triangulation bestimmt werden kann.

Wenigstens eine der Maßverkörperungen kann als Multipolmagnetring ausgebildet sein, welcher umlaufend alternierende magnetische Bereiche aufweist. Auch eine ferromagnetische Maßverkörperung mit Zähnen oder Schlitzen kann verwendet werden. Sind optische Sensoren vorgesehen, welche beispielsweise nach dem Reflexions- oder Durchlichtprinzip arbeiten, können die Maßverkörperungen abwechselnd optisch reflektierende bzw. durchlässige und nicht reflektierende bzw. undurchlässige Bereiche aufweisen.

In Anspruch 17 ist ein System zur Bestimmung von Positionsverlagerungen in wenigstens zwei unterschiedlichen Raumrichtungen zwischen einem ersten Element und einem zweiten Element, welche relativ zueinander beweglich sind, angegeben.

Mit Hilfe der Erfindung ist es möglich, ein Drehmoment oder eine Kraft an einem Antriebssystem zu ermitteln, wobei bereits im Stillstand oder nach geringer Bewegung (deutlich unter einer Umdrehung beispielsweise des Elektromotors) ein verlässlicher Messwert geliefert wird. Die Ermittlung kann redundant (zweikanalig) ausgeführt sein, um durch den Vergleich zweier Messwerte eine Fehlerdiagnose zu ermöglichen. Das Verfahren ist kostengünstig darstellbar und ersetzt im Antriebssystem bereits vorhandene Gebersysteme. Daneben ist eine Überprüfung der Lagerung auf korrekte Funktion sowie eine Verschleißmessung des Lagers möglich.

Vorteilhafte Ausgestaltungen und Weiterbildungen der Erfindung ergeben sich aus den Unteransprüchen. Nachfolgend ist anhand der Zeichnung ein Ausführungsbeispiel der Erfindung prinzipmäßig beschrieben.

Die mindestens zwei Magnetsensoren können in einem Gehäuse untergebracht sein, welches zusätzlich eine Recheneinheit bzw. eine elektronische Steuerungseinrichtung enthält, welche die Magnetsensorsignale entsprechend dem erfindungsgemäßen Verfahren bzw. Algorithmus verarbeitet und zumindest den absoluten Verdrehwinkel des Lagers, die um Ungenauigkeiten korrigierte relative Verschiebung der beiden Lagerringe zueinander in axialer und radialer Richtung, das aktuelle Lagerspiel und ein Fehlersignal über eine digitale Schnittstelle zur Verfügung stellen kann. In einer Ausgestaltung kann das Gehäuse zusätzlich eine Temperaturerfassung zur Ermittlung des aktuellen Betriebslagerspiels aufweisen.

In einer Weiterbildung der Erfindung kann der ermittelte absolute Verdrehwinkel des Lagers als Rotorlagesignal für eine Elektromaschine benutzt werden. Dadurch entfällt ein weiterer Rotorlagegeber oder es wird im Rahmen der funktionalen Sicherheit eine Redundanz zu einem bereits vorhandenen Rotorlagegeber geschaffen.

Es zeigen:

Figur 1        eine schematische Ausschnittsdarstellung einer Getriebewelle, welche in einer Lageranordnung gelagert ist zur Verdeutlichung des erfindungsgemäßen Verfahrens;

Figur 2a       ein vereinfachtes Schaubild eines zeitlichen Verlaufs eines axialen Luftspalts;

Figur 2b       ein vereinfachtes Schaubild eines zeitlichen Verlaufs eines radialen Luftspalts;

Figur 3        schematische Ansichten von Verzahnungsgeometrien eines Zahnrads; und

Figur 4        ein schematisches Blockdiagramm zur Verdeutlichung des erfindungsgemäßen Verfahrens.

In den Figuren sind funktionsgleiche Elemente mit denselben Bezugszeichen versehen.

Es wird ein Verfahren zur Bestimmung von Positionsverlagerungen in wenigstens zwei unterschiedlichen Raumrichtungen zwischen einem ersten Element und einem zweiten Element vorgeschlagen, welche relativ zueinander beweglich sind, mit wenigstens zwei berührungslos messenden Sensoren, welche in den wenigstens zwei unterschiedlichen Raumrichtungen zu wenigstens zwei mit dem zweiten Element fest verbundenen Maßverkörperungen beabstandet angeordnet sind, wobei Sensorflächen der wenigstens zwei Sensoren den wenigstens zwei Maßverkörperungen in der jeweiligen Raumrichtung gegenüberliegen und diese erfassen, wobei:

- die wenigstens zwei Sensoren die wenigstens zwei Maßverkörperungen abtasten und in Wechselwirkung mit den wenigstens zwei Maßverkörperungen Ausgangssignale erzeugen, mit welchen in Kombination eine absolute Position des zweiten Elements bestimmt wird, welche mit einer linearen Bewegung in einer weiteren Raumrichtung oder mit einer Drehbewegung verbunden ist, und
- wobei ferner mittels der Ausgangssignale der wenigstens zwei Sensoren Werte bestimmt werden, welche den Abstand zwischen dem jeweiligen Sensor und der entsprechenden Maßverkörperung des zweiten Elements in der zugehörigen Raumrichtung charakterisieren, welche in Abhängigkeit von der ermittelten absoluten Position des zweiten Elements korrigiert werden, und aus welchen die Positionsverlagerung des zweiten Elements relativ zu dem ersten Element in der jeweiligen Raumrichtung bestimmt wird.

Die den Abstand zwischen dem jeweiligen Sensor und der entsprechenden Maßverkörperung des zweiten Elements in der zugehörigen Raumrichtung charakterisierenden Werte können durch eine Amplitude des Ausgangssignals des jeweiligen Sensors bestimmt werden.

Dabei können die zwei Maßverkörperungen derart ausgelegt sein, dass sie in Verbindung miteinander Mittel zur Bestimmung der absoluten Position des zweiten Elements bilden.

Wenigstens zwei Maßverkörperungen können in Verbindung miteinander ein Binärmuster, ein Gray-Muster, einen Pseudo-Zufallscode, insbesondere mit einer zusätzlichen Inkrementalspur zur Feininterpolation, oder eine Noniusspur bilden.

Die wenigstens zwei Sensoren können mit dem ersten Element und/oder mit einer feststehenden Struktur verbunden sein.

Aus den ermittelten Positionsverlagerungen des zweiten Elements relativ zu dem ersten Element können Kräfte und/oder Drehmomente, welche zwischen dem ersten Element und dem zweiten Element wirken, bestimmt werden.

Aus den ermittelten Positionsverlagerungen des zweiten Elements relativ zu dem ersten Element können in den wenigstens zwei unterschiedlichen Raumrichtungen jeweils redundant Werte von Drehmomenten, deren Wirkungen die Positionsverlagerungen hervorrufen oder weitere externe Kräfte, welche auf das zweite Element wirken, ermittelt werden.

Ein resultierendes Drehmoment kann, insbesondere durch eine vorzugsweise gewichtete Mittelwertbildung, aus den redundant ermittelten Drehmomentwerten gebildet werden.

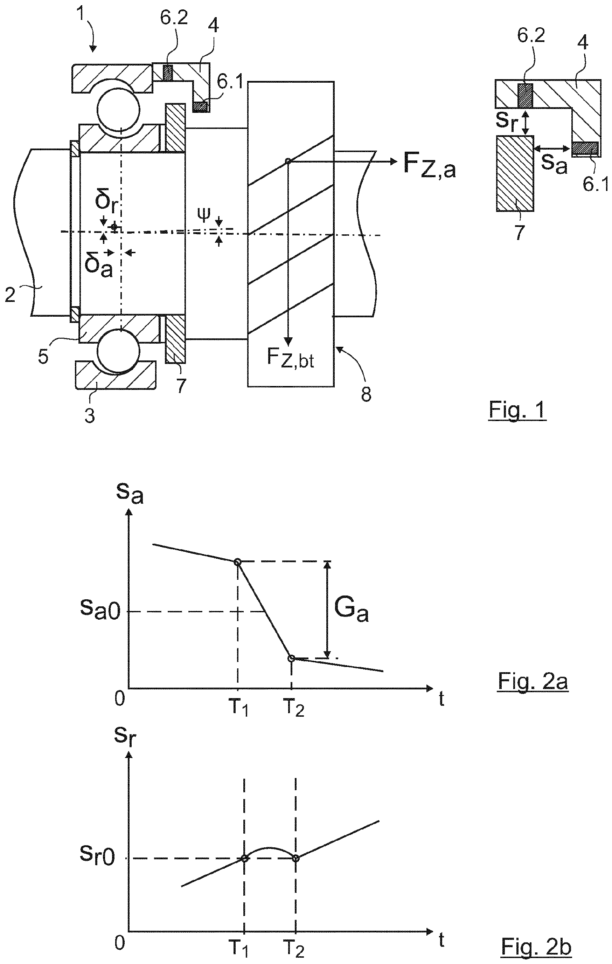

Im vorliegenden Ausführungsbeispiel wird das erfindungsgemäße Verfahren bei einem Lager, insbesondere bei einem Wälzlager 1 eingesetzt (siehe Figur 1). Figur 1 zeigt ausschnittsweise eine Getriebewelle 2, welche mit Wälzlagern 1 in einer Fest-Loslageranordnung gelagert ist. Figur 1 zeigt als Wälzlager 1 ein Festlager bzw. Rillenkugellager. Das erste Element ist als vorzugsweise feststehender erster Lagerring 3 des Wälzlagers 1 ausgeführt. Der erste Lagerring 3 ist als Lageraußenring mit einem Sensorgehäuse 4 und einer nicht dargestellten feststehenden Struktur verbunden. Als das zweite Element ist ein relativ zu dem ersten Lagerring 3 um eine Längsachse drehbar angeordneter zweiter Lagerring 5 des Wälzlagers 1 vorhanden. Wie aus Figur 1 ersichtlich ist an dem ersten Lagerring 3 das Sensorgehäuse 4 befestigt, welches zwei als Magnetsensoren 6.1 und 6.2 ausgeführte berührungslose Sensoren aufweist. Der Magnetsensor 6.1 ist in axialer Richtung (axialer Sensor), der Magnetsensor 6.2 in radialer Richtung (radialer Sensor) angeordnet. Am zweiten Lagerring 5 bzw. Lagerinnenring ist ein Polring 7 angeordnet, welcher umlaufend mit alternierenden magnetischen Bereichen, d. h. mit genau gefertigten, äquidistanten magnetischen Nord- und Südpolen versehen ist und einen Multipolmagnetring als Maßverkörperungen ausbildet. Dabei werden ein Nord- und ein angrenzender Südpol als Polpaar bezeichnet. Es sind umlaufend Polpaare auf der in die axiale Richtung zeigenden Stirnfläche (axiale Polpaare) sowie umlaufend Polpaare auf der in die radiale Richtung zeigenden Zylinderfläche (radiale Polpaare) aufgebracht (nicht näher dargestellt). Der Polring 7 vereint somit die vorstehend beschriebenen beiden Zielringe bzw. Maßverkörperungen. Die beiden Maßverkörperungen bzw. Zielringe bilden in Verbindung miteinander ein Mittel zur Bestimmung der absoluten Position des als zweiter Lagerring 5 ausgebildeten zweiten Elements, insbesondere eine Noniusspur. Hierzu sind beispielweise umlaufend ein radiales Polpaar mehr aufgebracht, als axiale Polpaare vorhanden sind. Beim Drehen der Getriebewelle 2 liefert der radial angebrachte Magnetsensor 6.2 ein sinusähnliches Signal, welches pro Umdrehung eine Periode mehr enthält als das sinusähnliche Signal des axialen Magnetsensors 6.1. Durch Auswerten der Phasenverschiebung zwischen den beiden Signalen (Noniusauswertung) wird der absolute Verdrehwinkel $\varphi$ der Getriebewelle 2 bestimmt. Bei zunächst stillstehender Getriebewelle 2 erfordert dies nur eine geringe Verdrehung, wodurch der absolute Verdrehwinkel $\varphi$ der Getriebewelle 2 kurz nach dem Andrehen mit hoher Zuverlässigkeit bekannt ist. Als die ermittelte absolute Position des zweiten Elements wird der absolute Verdrehwinkel $\varphi$ des zweiten Lagerrings 5 verwendet, welcher auf der Getriebewelle 2 angeordnet ist. Als eine erste Raumrichtung wird eine radiale Richtung und als eine zweite Raumrichtung eine axiale Richtung bezogen auf die Längsachse (Mittelachse) des zweiten Lagerrings 5 verwendet.

Die Drehrichtung kann beispielsweise mittels mehrerer Sensorelemente pro Magnetsensor 6.1, 6.2 erkannt werden, die in Umfangsrichtung versetzt angeordnet sind. Bevorzugt wird die Drehrichtung von jedem der beiden Magnetsensoren 6.1, 6.2 ermittelt. Ein Vergleich der beiden Ergebnisse dient der Fehlererkennung. Ebenfalls wird die Drehzahl der Getriebewelle 2 von jedem der beiden Sensoren ermittelt werden, wobei ein Vergleich der beiden Ergebnisse ebenfalls der Fehlererkennung dient. Ein Rohwert $S_{a,raw}$ für die Größe eines axialen Luftspalts $s_a$ zwischen den axialen Polpaaren des Polrings 7 und dem axialen Magnetsensor 6.1 wird anhand der Amplitude des Signals des axialen Magnetsensors 6.1 erkannt. Ein Rohwert $s_{r,raw}$ für eine Größe des radialen Luftspalts $s_r$ zwischen den radialen Polpaaren des Polrings 7 und dem radialen Magnetsensor 6.2 wird anhand der Amplitude des Signals des radialen Magnetsensors 6.2 erkannt. Mit größer werdendem Luftspalt $s_a$, $s_r$ verringern sich die Amplituden. So können die den Abstand bzw. Luftspalt $s_a$, $s_r$ zwischen dem jeweiligen Magnetsensor 6.1, 6.2 und der entsprechenden Maßverkörperung des Polrings 7 in der zugehörigen Raumrichtung charakterisierenden Werte durch die Amplitude des Ausgangssignals des jeweiligen Magnetsensors 6.1, 6.2 bestimmt werden. In dem Sensorgehäuse 4 ist eine insbesondere mehrkanalig ausgeführte Auswerteeinheit integriert (nicht dargestellt), welche redundante Fehlersignale ausgeben kann. Die Auswerteeinheit ist als elektronische Steuerungseinrichtung mit den wenigstens zwei Magnetsensoren 6.1, 6.2 kommunikationsverbunden und erhält deren Ausgangssignale als Eingangssignale. Die Auswerteeinheit ist dazu eingerichtet das erfindungsgemäße Verfahren auszuführen.

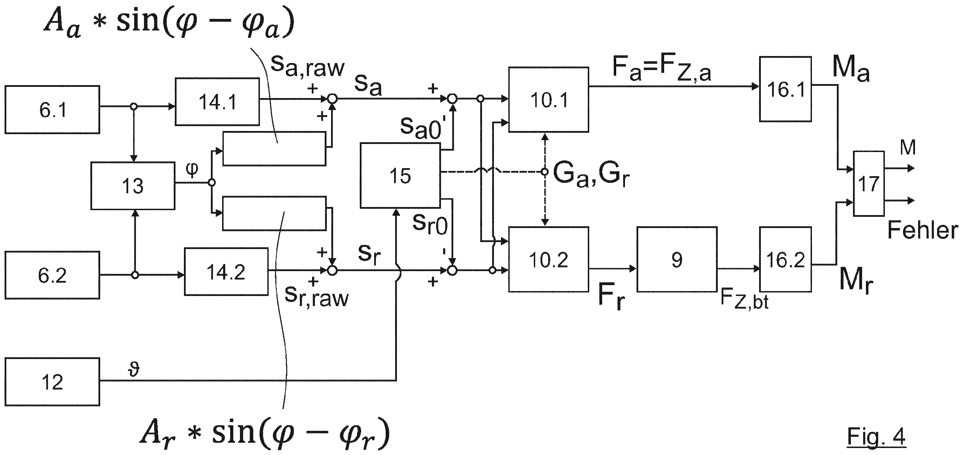

Die sinusähnlichen Sensorsignale können auch durch die Frequenz (Amplitudengang) sowie die Temperatur beeinflusst werden. Daher kann eine Korrektur der Amplituden basierend auf der aktuellen Drehzahl (welche die Frequenz vorgibt) sowie einer gemessenen aktuellen Temperatur vorgesehen sein. Dazu kann eine Temperaturerfassung oder ein Temperatursensor 12 (siehe Figur 4) in das Sensorgehäuse 4 integriert sein und von der Auswerteeinheit berücksichtigt werden.

Der Polring 7 und die weiteren Teile können über den Umfang verteilte geometrische und magnetische Ungenauigkeiten aufweisen. Diese wirken sich auf die Rohwerte $S_{a,raw}$ und $s_{r,raw}$ des axialen Luftspalts $s_a$ und des radialen Luftspaltes $s_r$ aus. Erfindungsgemäß wird der ermittelte absolute Verdrehwinkel $\varphi$ für eine Adaption bzw. Korrektur benutzt. Im folgenden Ausführungsbeispiel erfolgt hierzu eine sinusförmige Korrektur der Rohwerte:

$$s_a = s_{a,raw} + A_a \sin (\varphi - \varphi_a) \qquad (1)$$

$$s_r = s_{r,raw} + A_r \sin(\varphi - \varphi_r) \qquad (2)$$

Dabei werden die Parameter axiale Adaption $A_a$, axialer absoluter Verdrehwinkel $\varphi_a$, radiale Adaption $A_r$ und radialer absoluter Verdrehwinkel $\varphi_r$ in einem Betriebszustand mit konstanter Lagerlast derart optimiert, dass sich die korrigierten Luftspalte $s_a$, $s_r$ über eine Umdrehung hinweg möglichst wenig ändern. Ein Betriebszustand mit konstanter Lagerlast wird detektiert, indem der Rohwert $s_{a,raw}$ des axialen Luftspaltes $s_a$ über eine oder mehrere Umdrehungen hinweg bei demselben absoluten Verdrehwinkel $\varphi_{test}$ abgetastet wird und die betragsmäßige Abweichung der einzelnen Werte innerhalb einer vorgegebenen geringen Schwelle liegt. Ebenso wird bei einem Zustand mit konstanter Lagerlast der Rohwert $s_{r,raw}$ des radialen Luftspaltes $s_r$ über eine oder mehrere Umdrehungen hinweg bei demselben absoluten Verdrehwinkel $\varphi_{Test}$ abgetastet und die betragsmäßige Abweichung der einzelnen Werte muss innerhalb einer vorgegebenen geringen Schwelle liegen. Die Rohwerte $s_{a,raw}$, $s_{r,raw}$ können auch bei mehreren unterschiedlichen absoluten Verdrehwinkeln $\varphi_{Test1}$ ... $\varphi_{Testx}$ abgetastet werden. Wobei für jeden der absoluten Verdrehwinkel die betragsmäßige Abweichung der einzelnen Werte separat betrachtet wird. In einer Erweiterung können die Parameter $A_a$, $\varphi_a$, $A_r$, $\varphi_r$ drehzahlabhängig und/oder temperaturabhängig verändert werden, beispielsweise um auch Auswirkungen einer Unwucht und/oder einer unsymmetrischen Wärmedehnung zu korrigieren. Der Ansatz einer sinusförmigen Korrektur der Rohwerte ist rein beispielhaft zu sehen. Alternativ ist es denkbar, für jedes der Polpaare in einem Betriebszustand mit konstanter Lagerlast einen Korrekturwert zu bestimmen und diesen in einer Tabelle der Auswerteeinheit zu hinterlegen. Mit dem absoluten Verdrehwinkel $\varphi$ der Getriebewelle 2 bzw. des zweiten Lagerrings 5 sind auch die korrigierten Luftspalte $s_a$, $s_r$ nach einer geringen Verdrehung der zunächst stillstehenden Getriebewelle 2 mit hoher Zuverlässigkeit bekannt. Bei höheren Drehzahlen hingegen können Strukturschwingungen des Getriebes die sinusähnlichen Sensorsignale und somit die korrigierten Luftspalte $s_a$, $s_r$ beeinflussen. In diesem Fall kann eine Tiefpassfilterung der korrigierten Luftspalte $s_a$, $s_r$ verwendet werden, welche die höheren Frequenzen der Strukturschwingungen aus den Signalen eliminiert. Auch adaptive Filter, die eine bestimmte Frequenz wie beispielsweise eine drehzahlabhängige Zahneingriffsfrequenz aus den korrigierten Luftspalten $s_a$, $s_r$ entfernen, sind möglich. Die korrigierten Luftspalte $s_a$, $s_r$ lassen sich zudem für eine Wälzlager- oder Getriebediagnose heranziehen, indem aus den zeitlichen Verläufen in Verbindung mit der erfassten Drehzahl bzw. dem absoluten Verdrehwinkel $\varphi$ wiederkehrende Störungen ermittelt werden. Diese lassen zusammen mit den Überrollfrequenzen auf Schäden an einer Laufbahn, an Wälzkörpern oder am Zahn eines Zahnrades schließen.

Der axiale Luftspalt $s_a$ ändert sich infolge einer axialen Verlagerung $\delta_a$ (siehe Figur 1) des Lagers bei einer Axialkraft sowie durch eine Verkippung $\psi$ des Wälzlagers 1, beispielsweise aufgrund einer Wellendurchbiegung. Im allgemeinen Fall kann vorgesehen sein, den axialen Magnetsensor 6.1 so zu positionieren, dass sich bei einer Belastung der Lagerung die Wirkungen der axialen Verlagerung $\delta_a$ und der Verkippung $\psi$ auf den axialen Luftspalt $s_a$ addieren, um eine größtmögliche Änderung des axialen Luftspaltes $s_a$ bei Belastung zu erhalten. Im Ausführungsbeispiel wird der Einfachheit halber von einer kurzen Getriebewelle 2 mit geringer Wellendurchbiegung ausgegangen. Die Verkippung $\psi$ wird daher vernachlässigt. Der radiale Luftspalt $s_r$ ändert sich infolge einer radialen Verlagerung $\delta_r$ des Wälzlagers 1 (siehe Figur 1) bei einer Radialkraft. Es wird vorgeschlagen, den radialen Magnetsensor 6.2 in Kraftrichtung der bei einer Belastung der Lagerung entstehenden Radialkraft zu positionieren, so dass sich die Belastung der Lagerung möglichst stark auf eine Änderung des radialen Luftspaltes $s_r$ auswirkt.

Das Betriebslagerspiel ist abhängig von der Lagerluftklasse (nominelle Lagerluft) des Wälzlagers 1, den Passungen an den Lagersitzen für die Lagerringe 3, 5 sowie Verschleiß und Wärmedehnungen. Es wird vorgeschlagen, das aktuelle axiale Betriebslagerspiel sowie die geometrische axiale Mittellage des Wälzlagers 1 bei einem Nulldurchgang (d. h. bei einem Vorzeichenwechsel) der axialen Lagerlast zu detektieren. Figur 2a zeigt beispielhaft einen zeitlichen Verlauf des axialen Luftspaltes $s_a$. Im ersten Bereich zwischen Null und dem Zeitpunkt $T_1$, ändert sich der axiale Luftspalt $s_a$ nur mit einem geringen Gradienten über der Zeit t. Das Wälzlager 1 steht unter axialer Last, Änderungen dieser axialen Lagerlast wirken sich über die Elastizitäten auf den axialen Luftspalt $s_a$ aus. Im mittleren Bereich zwischen den beiden Zeitpunkten $T_1$ und $T_2$ ändert sich das Vorzeichen der axialen Lagerlast. Dabei wird ein gesamtes Axialspiel $G_a$ durchlaufen, welches die gesamte Verschieblichkeit des Lagerinnenrings bzw. zweiten Lagerrings 5 gegenüber dem Lageraußenring bzw. ersten Lagerring 3 von einem Kontaktpunkt zum anderen infolge der Lagerluft kennzeichnet. Dies erfolgt mit einem relativ großen Gradienten. Dieser geänderte Gradient kann in vorteilhafter Weise dazu benutzt werden, um den Durchlauf des Axialspiels $G_a$ zu detektieren. Nach dem Durchlauf, ab dem Zeitpunkt $T_2$ ändert sich der axiale Luftspalt $s_a$ wiederum nur mit geringem Gradienten. In der Mitte des Axialspiels $G_a$ liegt die geometrische axiale Mittellage des Wälzlagers 1 vor. Daraus kann die zugehörige Mittellage $s_{a0}$ des axialen Luftspaltes $s_a$ berechnet werden, welche die geometrische Mittellage des Wälzlagers 1 in axialer Richtung kennzeichnet. Im vorliegenden Ausführungsbeispiel trägt die betrachtete Getriebewelle 2 ein schrägverzahntes Zahnrad 8, welches die maßgebliche Lagerlast erzeugt. Eine Zahnnormalkraft ist in Figur 1 mit $F_{Z,bt}$ und eine Zahnaxialkraft mit $F_{Z,a}$ bezeichnet. Beim Durchlauf des Axialspiels $G_a$, d. h. beim Vorzeichenwechsel der axialen Lagerlast ist somit auch von einer radialen Lagerlast nahe Null auszugehen. In diesem Zustand werden auch Wellendurchbiegungen sowie die daraus resultierende Verkippung $\psi$ des Wälzlagers 1 gering und somit vernachlässigbar. Zu den Zeitpunkten $T_1$ und $T_2$ befindet sich das Wälzlager 1 nahezu unbelastet in seinen axialen Endlagen und somit aufgrund der Geometrie des Rillenkugellagers gleichzeitig in der radialen Mittellage. Es kann nun aus den zu den Zeitpunkten $T_1$ und $T_2$ vorliegenden Werten des radialen Luftspaltes $s_r$ die Mittellage $s_{r0}$ des radialen Luftspaltes $s_r$ berechnet werden, beispielsweise durch Mittelung der beiden Werte. Die Mittellage $s_{r0}$ des radialen Luftspaltes $s_r$ kennzeichnet die geometrische Mittellage des Wälzlagers 1 in radialer Richtung (siehe Figur 2b). Die Figur 2b zeigt beispielhaft einen zeitlichen Verlauf des radialen Luftspalts $s_r$.

Bei konstanter Lagertemperatur ändert sich das Axialspiel $G_a$ nur langsam über die Zeit, beispielsweise durch Einlaufen, Setzerscheinungen oder Verschleiß. Die Lagertemperatur dagegen kann sich kurzfristig ändern. Die ermittelten Werte des Axialspiels $G_a$ und der Mittellagen $s_{a0}$, $s_{r0}$ werden basierend auf der zum Zeitpunkt der Ermittlung herrschenden Lagertemperatur $\vartheta_0$ und der gemessenen aktuellen Lagertemperatur 9 korrigiert. Damit lassen sich das aktuelle Axialspiel $G_a$ und die aktuellen Mittellagen $s_{a0}$, $s_{r0}$ gut erfassen, auch wenn diese bei einer anderen Lagertemperatur 9o ermittelt wurden. D. h., wenn ein Nulldurchgang der Lagerlast bereits vor längerer Zeit und bei anderer Lagertemperatur stattgefunden hat. In vielen Anwendungen wird das Betriebslagerspiel bei einem Nulldurchgang (d. h. bei einem Vorzeichenwechsel) des Antriebsdrehmoments oder der Antriebskraft durchlaufen. Es wird daher vorgeschlagen, die oben beschriebene Detektion anhand eines geschätzten oder beobachteten Antriebsdrehmoments beispielsweise anhand von gemessenen Strömen einer Elektromaschine, zu plausibilisieren. Das Radialspiel $G_r$ des Lagers bzw. Wälzlagers 1 wird basierend auf dem ermittelten Axialspiel $G_a$ und der Lagergeometrie berechnet. Es kann eine Überprüfung bzw. Feinadaption des Radialspiels $G_r$ und des Axialspiels $G_a$ anhand eines geschätzten oder beobachteten Antriebsdrehmoments und anhand des ermittelten axialen Luftspaltes $s_a$ sowie des radialen Luftspaltes $s_r$ erfolgen. Bei einer zu starken Abweichung des Axialspiels $G_a$ und/oder des Radialspiels $G_r$ von temperaturabhängig vordefinierten Werten kann auf einen mechanischen Fehler oder einen zu hohen Lagerverschleiß geschlossen und ein Fehlersignal erzeugt werden. Beispielsweise wird für Elektrofahrzeuge vorgeschlagen, die Elektromaschine bei stehendem Fahrzeug und betätigter Bremse abwechselnd mit einem geringen positiven und einem geringen negativen Antriebsdrehmoment anzusteuern. Die Höhe des Antriebsdrehmoments wird anhand des aktuellen Bremsdrucks festgelegt, so dass das Antriebsdrehmoment das Bremsmoment nicht überwindet und keine Fahrzeugbewegung erfolgt. Dabei ergibt sich ein Nulldurchgang des Antriebsdrehmoments. Bei einer Schrägverzahnung wird das Axialspiel $G_a$ des betrachteten Lagers durchlaufen und erfasst. Typischerweise liegen Lose und Elastizitäten im Antriebsstrang vor, so dass sich die betrachtete Getriebewelle 2 aufgrund des wechselnden Antriebsdrehmoments zyklisch leicht verdreht und die Größe des axialen Luftspalts $S_{a,raw}$ sowie die Größe des radialen Luftspalts $s_{r,raw}$ anhand der Amplituden der Sensorsignale mit hoher Zuverlässigkeit erfasst werden können. Ebenso lässt sich der absolute Verdrehwinkel $\varphi$ der Getriebewelle 2 zur Ermittlung der korrigierten Luftspalte $s_a$, $s_r$ mit hoher Zuverlässigkeit bestimmen. Eine zu große Änderung des absoluten Verdrehwinkels $\varphi$ infolge einer ungewollten Fahrzeugbewegung wird detektiert und führt zu einer Fehlerreaktion, beispielsweise durch Abschaltung des Antriebssystems. Das wechselnde Antriebsdrehmoment kann auch dazu genutzt werden, um vor dem Anfahren des Fahrzeugs den absoluten Verdrehwinkel $\varphi$ des Rotors einer Elektromaschine eindeutig und mit hoher Zuverlässigkeit zu bestimmen. Auf einen weiteren Rotorlagegeber kann somit verzichtet werden oder es wird aus Sicherheitsgründen eine Redundanz der Rotorlageerfassung geschaffen.

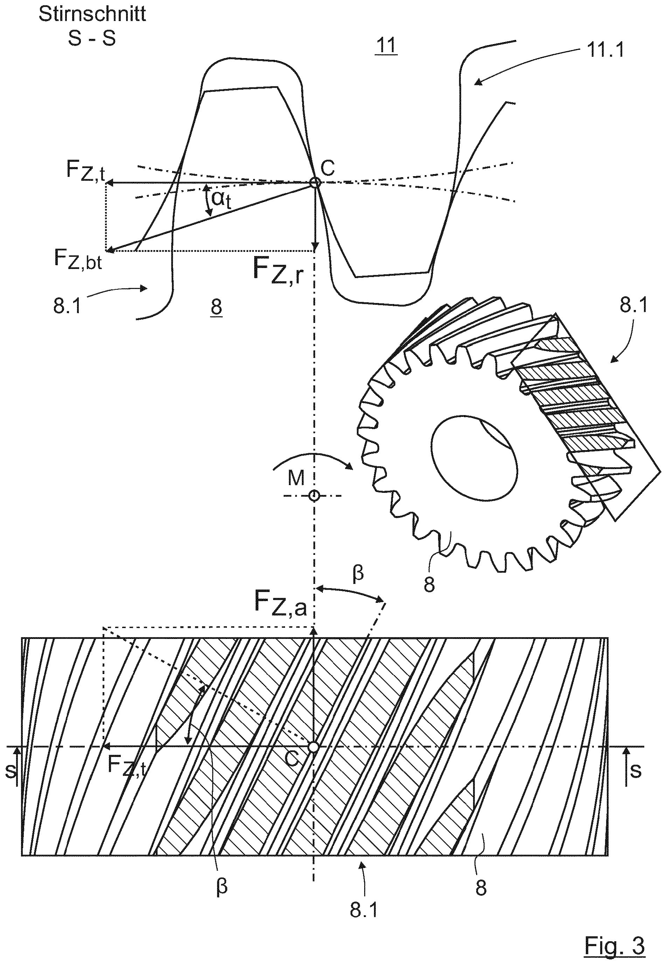

Zahnradgetriebe sind zumeist mit einer Evolventenverzahnung versehen. In Figur 3 ist das schräg verzahnte Zahnrad 8 mit einer entsprechenden Verzahnungsgeometrie 8.1 dargestellt. Ein Wälzpunkt ist mit dem Bezugszeichen C versehen. Selbstverständlich sind auch andere nicht dargestellte Verzahnungsgeometrien möglich. In Figur 3 ist ein zweites Zahnrad mit dem Bezugszeichen 11 und dessen Verzahnungsgeometrie mit dem Bezugszeichen 11.1 versehen. Ein Antriebsdrehmoment M führt zu der Zahnnormalkraft $F_{Z,bt}$ im Stirnschnitt beziehungsweise zu einer Zahntangentialkraft $F_{Z,t}$ (siehe Figur 3). Mit dem Wälzkreisdurchmesser $d_w$ (nicht dargestellt) und dem Eingriffswinkel $\alpha_t$ gilt bei Vernachlässigung der Reibung:

$$F_{Z,t} = M \cdot \frac{2}{d_w} \qquad (3)$$

$$F_{Z,bt} = F_{Z,t} \cdot \frac{1}{\cos\alpha_t} = M \cdot \frac{2}{d_w \cdot \cos\alpha_t} \qquad (4)$$

Bei Schrägverzahnung entsteht infolge eines Schrägungswinkels $\beta$ zusätzlich eine Zahnaxialkraft $F_{Z,a}$, welche von der Lagerung aufgenommen wird:

$$F_{Z,a} = F_{Z,t} \cdot \tan\beta = M \cdot \frac{2 \cdot \tan\beta}{d_w} \qquad (5)$$

EP 4 025 875 B1

Die Zahnnormalkraft $F_{Z,bt}$ im Stirnschnitt S-S lässt sich über Gleichgewichtsbedingungen 9 der Getriebewelle 2 aus einer radialen Lagerkraft $F_r$ bestimmen (siehe Figur 4). Das im vorliegenden Ausführungsbeispiel betrachtete Lager bzw. Wälzlager 1 ist ein Festlager einer Fest-Loslageranordnung und nimmt somit die gesamte Axialkraft auf. Die Zahnaxialkraft $F_{Z,a}$ entspricht somit einer axialen Lagerkraft $F_a$. Die axiale Lagerkraft $F_a$ und die radiale Lagerkraft $F_r$ werden anhand von Lagermodellen 10.1, 10.2 aus dem aktuellen axialen Luftspalt $s_a$, dem radialen Luftspalt $s_r$, den aktuellen Mittellagen $s_{a0}$, $s_{r0}$ und dem aktuellen Axialspiel $G_a$ bzw. Radialspiel $G_r$ ermittelt (siehe Figur 4).

Es können zwei Drehmomentwerte $M_a$ und $M_r$ für dasselbe Antriebsdrehmoment M über zwei Zusammenhänge ermittelt werden:

- Der Drehmomentwert $M_a$ kann anhand der axialen Lagerkraft $F_a$, welche überwiegend von dem axialen Luftspalt $s_a$ abhängt unter Nutzung der Gleichung (5) ermittelt werden.
- Der Drehmomentwert $M_r$ kann anhand der radialen Lagerkraft $F_r$, welche überwiegend von dem radialen Luftspalt $s_r$ abhängt unter Nutzung von Gleichung (4) ermittelt werden. Hierzu wird mit Hilfe der Gleichgewichtsbedingungen 9 der Getriebewelle 2 zunächst die Zahnnormalkraft $F_{Z,bt}$ im Stirnschnitt S-S aus der radialen Lagerkraft $F_r$ ermittelt.

Die Zusammenhänge können zusätzlich um Massenkräfte infolge von Beschleunigungen (z. B. Fahrstöße durch Schlaglöcher) erweitert werden, wobei die Beschleunigungen gemessen oder anhand anderer Größen ermittelt bzw. beobachtet werden. Demzufolge werden ein aktuelles Betriebslagerspiel und/oder Massenkräfte infolge von Beschleunigungen bei der Bestimmung der Kräfte, welche zwischen dem ersten Lagerring 3 und dem zweiten Lagerring 5 wirken und/oder der Drehmomente, deren Wirkungen die Kräfte hervorrufen, berücksichtigt.

Es kann vorgesehen sein, das resultierende Antriebsdrehmoment M durch eine betriebszustandsabhängige gewichtete Mittelwertbildung der Drehmomentwerte $M_a$ und $M_r$ zu bestimmen und die Abweichung der Drehmomentwerte $M_a$ und $M_r$ voneinander zu ermitteln. Der erste Wert eines Drehmoments $M_a$, welches auf das Wälzlager 1 wirkt, wird somit aus der axialen Lagerkraft $F_a$ und der zweite Wert des Drehmoments $M_r$ aus der radialen Lagerkraft $F_r$, gebildet, wobei die axiale Lagerkraft $F_a$ und die radiale Lagerkraft $F_r$ von dem Wälzlager 1 aufgenommen und durch das Drehmoment M hervorgerufen werden.

Die axiale Lagerkraft $F_a$ kann anhand des Lagermodells 10.1 im Wesentlichen oder vollständig aus dem den Abstand zwischen dem Magnetsensor 6.1 und der entsprechenden nicht dargestellten Maßverkörperung des zweiten Lagerrings 5 in der axialen Raumrichtung charakterisierenden Wert bzw. dem axialen Luftspalt $s_a$ gebildet werden.

Die radiale Lagerkraft $F_r$ kann anhand des Lagermodells 10.2 im Wesentlichen oder vollständig aus dem den Abstand zwischen dem Magnetsensor 6.2 und der entsprechenden nicht dargestellten Maßverkörperung des zweiten Lagerrings 5 in der radialen Raumrichtung charakterisierenden Wert bzw. dem radialen Luftspalt $s_r$ gebildet werden.

Insbesondere zur Fehlerdetektion kann eine Abweichung zwischen dem ersten Drehmomentwert $M_a$ und dem zweiten Drehmomentwert $M_r$ bestimmt werden. Dabei kann ein Fehler erkannt werden, wenn die Abweichung zwischen dem ersten Drehmomentwert $M_a$ und dem zweiten Drehmomentwert $M_r$ über einem vorgegebenen, vorzugsweise betriebszustandsabhängigen Schwellwert liegt.

Bei einer zu großen Abweichung (größer als eine betriebszustandsabhängige Schwelle) wird auf einen Fehler in der Sensorik, der Auswertung oder der Lagerung geschlossen und eine Abschaltung des Antriebssystems oder ein Betrieb mit reduzierter Leistung eingeleitet. Mit Hilfe dieser Redundanz werden Fehler bei der Bestimmung des Antriebsdrehmoments M zuverlässig erkannt, verbunden mit hoher Sicherheit. Auch Fehler in der Lagerung lassen sich erkennen, beispielsweise eine gestörte Loslagerfunktion, bei der das Loslager ungewollt Axialkräfte aufnimmt. Dieses Vorgehen ist kostengünstig, da eine Messung an beiden Lagern vermieden wird. Bei weiteren nicht dargestellten Anwendungen werden die Lagerkräfte durch weitere externe Kräfte beeinflusst, beispielsweise durch Gewichtskräfte oder die Magnetkräfte einer Elektromaschine. Die axiale Lagerkraft $F_a$ kann z. B. eine zusätzliche externe Schubkraft eines Propellers oder Lüfters beinhalten. Es kann daher vorteilhaft sein, entsprechende Kräfte zu ermitteln und beispielsweise bei der Umrechnung der axialen Lagerkraft $F_a$ in die Zahnaxialkraft $F_{Z,a}$ zu berücksichtigen. Die Schubkraft eines Lüfters lässt sich hierzu basierend auf der aktuellen Drehzahl abschätzen. Bei mehreren Zahnrädern auf einer Welle sind sämtliche Zahnkräfte zu berücksichtigen.

Das erfindungsgemäße Verfahren kann bei einem eine, insbesondere elektrifizierte Antriebsordnung aufweisenden Fahrzeug verwendet werden, wobei das Wälzlager 1 ein Teil der Antriebsanordnung ist und die Getriebewelle 2 der Antriebsanordnung den zweiten Lagerring 5 aufnimmt und wobei ein resultierendes Antriebsdrehmoment M durch eine, insbesondere betriebszustandsabhängige gewichtete Mittelwertbildung des ersten und des zweiten Drehmomentwerts $M_a$, $M_r$ bestimmt wird.

Figur 4 gibt einen Überblick über das gesamte erfindungsgemäße Verfahren in Form eines Blockdiagramms bzw. Signalflussdiagramms.

Die Funktionseinheit 13 weist eine Noniusauswertung auf, welche den absoluten Verdrehwinkel $\varphi$ der Getriebewelle 2 bestimmt. Die Funktionsblöcke 14.1 und 14.2 umfassen die Amplitudenauswertungen für die Ausgangssignale der Magnetsensoren 6.1, 6.2. Die Ermittlung des Betriebslagersspiels wird in einer Funktionseinheit 15 durchgeführt.

In Figur 4 ist ein Temperatursensor mit dem Bezugzeichen 12 versehen.

Die Lagermodelle 10.1, 10.2 erhalten als Eingangsgrößen die korrigierten Werte des axialen Luftspalts $s_a$ und des radialen Luftspaltes $s_r$, modifiziert um die Mittellagen $s_{a0}$, $s_{r0}$ sowie die ermittelten Werte des Axialspiels $G_a$ und des Radialspiels $G_r$. Ausgangsgrößen der Lagermodelle 10.1, 10.2 sind die axiale Lagerkraft $F_a$ und die radiale Lagerkraft $F_r$. Die Lagermodelle 10.1, 10.2 enthalten eine nichtlineare, gekoppelte Steifigkeitscharakteristik. Damit wird eine Verkopplung der Freiheitsgrade berücksichtigt. Z. B. bei einem Rillenkugellager wirkt sich eine Änderung der axialen Verlagerung $\delta_a$ typischerweise auch auf die radiale Lagerkraft $F_r$ aus. Ebenso beeinflusst die radiale Verlagerung $\delta_r$ auch die axiale Lagerkraft $F_a$. Die Lagermodelle 10.1, 10.2 können auf der Berechnung der Lastverteilung basieren, in welche die Radien für die Berechnung der Hertzschen Pressung sowie das Betriebslagerspiel einfließen. Das Betriebslagerspiel wiederum wird durch die Lagerluftklasse des Lagers bzw. Wälzlagers 1, die Passungen an den Lagersitzen für Wälzlagerinnen- und Wälzlageraußenring, Verschleiß sowie Wärmedehnungen beeinflusst und entsprechend bestimmt. Die Lagermodelle 10.1, 10.2 lassen sich beispielsweise durch Lagersteifigkeitskennfelder beschreiben. In einer Erweiterung berücksichtigen die Lagermodelle 10.1, 10.2 die aktuelle Drehzahl, da Fliehkräfte die Lagerkinematik bei hoher Drehzahl verändern.

Die Funktionseinheiten 16.1 und 16.2 umfassen Verzahnungsmodelle beziehungsweise die Zusammenhänge der Gleichungen (4) und (5). Aus der ermittelten axialen Lagerkraft $F_a$ werden die Zahnaxialkraft $F_{Z,a}$ und mit Hilfe von Gleichung (5) ein erster Drehmomentwert $M_a$ für das resultierende Antriebsdrehmoment M ermittelt. Aus der ermittelten radialen Lagerkraft $F_r$ werden mit Hilfe der Gleichgewichtsbedingungen 9 der Getriebewelle 2 zunächst die Zahnnormalkraft $F_{Z,bt}$ im Stirnschnitt S-S und unter Nutzung der Gleichung (4) dann ein zweiter Drehmomentwert $M_r$ für das resultierende Antriebsdrehmoment M ermittelt.

In einer Funktionseinheit 17 erfolgt eine Mittelwertbildung zwischen den Drehmomentwerten $M_a$, $M_r$ sowie eine Fehlerdetektion, wenn die Abweichung zwischen dem ersten Drehmomentwert $M_a$ und dem zweiten Drehmomentwert $M_r$ über einem vorgegebenen Schwellwert liegt.

Beim Vorzeichenwechsel des resultierenden Antriebsdrehmoments M ändert sich die Orientierung der Zahnaxialkraft $F_{Z,a}$ bei gleich bleibender Wirklinie, wodurch das Vorzeichen des Antriebsdrehmoments M eindeutig erkannt wird. Die Zahnnormalkraft $F_{Z,bt}$ im Stirnschnitt S-S nimmt aufgrund des Wechsels von der Zahnvorder- auf die -rückflanke eine andere Wirklinie ein, wodurch sich der Winkel zwischen dieser Wirklinie und der von Polring 7 und Magnetsensor 6.2 vorgegebenen radialen Richtung ebenfalls ändert. Dieser Effekt wird bei der Ermittlung des zweiten Drehmomentwerts $M_r$ berücksichtigt. Das unterschiedliche Verhalten von der Zahnaxialkraft $F_{Z,a}$ und der Zahnnormalkraft $F_{Z,bt}$ im Stirnschnitt S-S wird somit genutzt, um die Zuverlässigkeit der Fehlerdetektion zu erhöhen.

In einer anderen Ausgestaltung der Erfindung werden weitere externe Kräfte bestimmt, welche auf den zweiten Lagerring 5 wirken, wie Magnetkräfte einer Elektromaschine oder Kräfte eines Propellers oder Lüfters. Beispielsweise wirkt sich die Schubkraft eines Propellers als weitere externe axiale Kraft $F_{Ext,a}$ zusätzlich zur Zahnaxialkraft $F_{Z,a}$ auf die axiale Lagerkraft $F_a$ aus:

$$F_a = F_{Z,a} + F_{Ext,a} \tag{6}$$

Entsprechend Figur 4 wird in diesem Beispiel aus der ermittelten radialen Lagerkraft $F_r$ ebenfalls ein zweiter Drehmomentwert $M_r$ für das resultierende Antriebsdrehmoment M ermittelt. Unter der Vernachlässigung von Ungenauigkeiten entspricht dieser zweite Drehmomentwert $M_r$ dem ersten Drehmomentwert $M_a$, da beide Werte dasselbe resultierende Antriebsdrehmoment M kennzeichnen:

$$M_a = M_r \tag{7}$$

Aus dem ersten Drehmomentwert $M_a$ wird dann mit Hilfe von Gleichung (5) die Zahnaxialkraft $F_{Z,a}$ berechnet. Daraus und aus der mittels Lagermodell 10.1 ermittelten axialen Lagerkraft $F_a$ wird mit Hilfe von Gleichung (6) die externe axiale Kraft $F_{Ext,a}$ (Schubkraft des Propellers) bestimmt. Ein entsprechendes Vorgehen ist möglich, um externe radiale Kräfte, beispielsweise radiale Bearbeitungskräfte auf eine Walze im Walzwerk, zu bestimmen.

Das erfindungsgemäße Verfahren kann auf einer nicht dargestellten elektronischen Steuerungseinrichtung ausgeführt werden, welche mit den Magnetsensoren 6.1, 6.2 und dem Temperatursensor 12 verbunden ist und deren Ausgangssignale als Eingangssignale erhält.

Bezugszeichenliste

| | | |
|---|---|---|
| 1 | Wälzlager |
| 2 | Getriebewelle |
| 3 | erster Lager(außen)ring |
| 4 | Sensorgehäuse |
| 5 | zweiter Lager(innen)ring |
| 6.1 | Magnetsensor (axial) |
| 6.2 | Magnetsensor (radial) |
| 7 | Polring |
| 8 | schrägverzahntes Zahnrad |
| 8.1 | Verzahnungsgeometrie |
| 9 | Gleichgewichtsbedingungen |
| 10.1 | Lagermodell |
| 10.2 | Lagermodell |
| 11 | zweites Zahnrad |
| 11.1 | Verzahnungsgeometrie |
| 12 | Temperatursensor |
| 13 | Funktionseinheit Noniusauswertung |
| 14.1 | Funktionseinheit Amplitudenauswertung |
| 14.2 | Funktionseinheit Amplitudenauswertung |
| 15 | Funktionseinheit zur Ermittlung des Betriebslagerspiels |
| 16.1 | Funktionseinheit Verzahnungsmodell |
| 16.2 | Funktionseinheit Verzahnungsmodell |
| 17 | Funktionseinheit zur Mittelwertbildung bzw. Fehlerdetektion |
| $\varphi$ | absoluter Verdrehwinkel |
| $s_r$ | radialer Luftspalt |
| $s_a$ | axialer Luftspalt |
| $t$ | Zeit |
| $T_1$ | Zeitpunkt |
| $T_2$ | Zeitpunkt |
| $s_{a0}$ | Mittellage des axialen Luftspalts |
| $s_{r0}$ | Mittellage des radialen Luftspalts |
| $G_a$ | Axialspiel |
| $G_r$ | Radialspiel |
| $\vartheta$ | Lagertemperatur |
| $M$ | Antriebsdrehmoment |
| $M_a$ | Drehmomentwert |
| $M_r$ | Drehmomentwert |
| $\delta_a$ | axiale Verlagerung |
| $\delta_r$ | radiale Verlagerung |
| $\psi$ | Verkippung |
| $F_{Z,a}$ | Zahnaxialkraft |
| $F_{Z,bt}$ | Zahnnormalkraft |
| $F_{Z,r}$ | Zahnradialkraft |
| $F_{Z,t}$ | Zahntangentialkraft |
| $\beta$ | Schrägungswinkel |
| $\alpha_t$ | Eingriffswinkel |
| $F_a$ | axiale Lagerkraft |
| $F_r$ | radiale Lagerkraft |
| $S_{a,raw}$ | Rohwert des axialen Luftspalts |
| $s_{r,raw}$ | Rohwert des radialen Luftspalts |
| $C$ | Wälzpunkt |

**Patentansprüche**

1. Verfahren zur Bestimmung von Positionsverlagerungen in wenigstens zwei unterschiedlichen Raumrichtungen zwischen einem ersten Element (3) und einem zweiten Element (5), welche relativ zueinander beweglich sind, mit wenigstens zwei berührungslos messenden Sensoren (6.1,6.2), welche in den wenigstens zwei unterschiedlichen Raumrichtungen zu wenigstens zwei mit dem zweiten Element (5) fest verbundenen Maßverkörperungen beabstandet angeordnet sind, wobei Sensorflächen der wenigstens zwei Sensoren (6.1,6.2) den wenigstens zwei Maßverkörperungen in der jeweiligen Raumrichtung gegenüberliegen und diese erfassen, wobei:

- die wenigstens zwei Sensoren (6.1,6.2) die wenigstens zwei Maßverkörperungen abtasten und in Wechselwirkung mit den wenigstens zwei Maßverkörperungen Ausgangssignale erzeugen, mit welchen in Kombination eine absolute Position des zweiten Elements (5) bestimmt wird, welche mit einer linearen Bewegung in einer weiteren Raumrichtung oder mit einer Drehbewegung verbunden ist, und
- wobei ferner mittels der Ausgangssignale der wenigstens zwei Sensoren (6.1,6.2) Werte bestimmt werden, welche den Abstand zwischen dem jeweiligen Sensor (6.1,6.2) und der entsprechenden Maßverkörperung des zweiten Elements (5) in der zugehörigen Raumrichtung charakterisieren, welche in Abhängigkeit von der ermittelten absoluten Position ($\varphi$) des zweiten Elements (5) korrigiert werden, und aus welchen die Positionsverlagerung des zweiten Elements (5) relativ zu dem ersten Element (3) in der jeweiligen Raumrichtung bestimmt wird.

2. Verfahren nach Anspruch 1, wobei die den Abstand zwischen dem jeweiligen Sensor (6.1,6.2) und der entsprechenden Maßverkörperung des zweiten Elements (5) in der zugehörigen Raumrichtung charakterisierenden Werte durch eine Amplitude des Ausgangssignals des jeweiligen Sensors (6.1,6.2) bestimmt werden.

3. Verfahren nach Anspruch 1 oder 2, wobei die wenigstens zwei Maßverkörperungen derart ausgelegt sind, dass sie in Verbindung miteinander Mittel zur Bestimmung der absoluten Position des zweiten Elements (5) bilden.

4. Verfahren nach Anspruch 1, 2 oder 3, wobei die wenigstens zwei Maßverkörperungen in Verbindung miteinander ein Binärmuster, ein Gray-Muster, einen Pseudo-Zufallscode, insbesondere mit einer zusätzlichen Inkrementalspur zur Feininterpolation, oder eine Noniusspur bilden.

5. Verfahren nach einem der Ansprüche 1 bis 4, wobei die wenigstens zwei Sensoren (6.1,6.2) mit dem ersten Element (3) und/oder mit einer feststehenden Struktur verbunden sind.

6. Verfahren nach einem der Ansprüche 1 bis 5, wobei aus den ermittelten Positionsverlagerungen des zweiten Elements (5) relativ zu dem ersten Element (3) Kräfte und/oder Drehmomente, welche zwischen dem ersten Element (3) und dem zweiten Element (5) wirken, bestimmt werden.

7. Verfahren nach einem der Ansprüche 1 bis 6, wobei aus den ermittelten Positionsverlagerungen des zweiten Elements (5) relativ zu dem ersten Element (3) in den wenigstens zwei unterschiedlichen Raumrichtungen jeweils redundant Werte von Drehmomenten, deren Wirkungen die Positionsverlagerungen hervorrufen oder weitere externe Kräfte, welche auf das zweite Element (5) wirken, ermittelt werden, wobei vorzugsweise ein resultierendes Drehmoment, insbesondere durch eine vorzugsweise gewichtete Mittelwertbildung, aus den redundant ermittelten Drehmomentwerten gebildet wird.

8. Verfahren nach einem der Ansprüche 1 bis 7, welches bei einem Lager, insbesondere einem Wälzlager (1) eingesetzt wird, wobei als das erste Element ein vorzugsweise feststehender erster Lagerring (3) des Lagers und als das zweite Element ein relativ zu dem ersten Lagerring (3) um eine Längsachse drehbar angeordneter zweiter Lagerring (5) des Lagers verwendet wird, wobei vorzugsweise als die ermittelte absolute Position des zweiten Elements (5) ein absoluter Verdrehwinkel ($\varphi$) des zweiten Lagerrings (5) verwendet wird.

9. Verfahren nach Anspruch 8, wobei als eine erste Raumrichtung eine radiale Richtung und als eine zweite Raumrichtung eine axiale Richtung bezogen auf die Längsachse des zweiten Lagerrings (5) verwendet werden.

10. Verfahren nach einem der Ansprüche 8 oder 9, wobei ein aktuelles Betriebslagerspiel und/oder Massenkräfte infolge von Beschleunigungen bei der Bestimmung der Kräfte, welche zwischen dem ersten Lagerring (3) und dem zweiten Lagerring (5) wirken und/oder der Drehmomente, deren Wirkungen die Kräfte hervorrufen, berücksichtigt werden.

11. Verfahren nach einem der Ansprüche 8 bis 10, wobei ein erster Wert eines Drehmoments ($M_a$), welches auf das Lager (1) wirkt, aus einer axialen Lagerkraft ($F_a$), und ein zweiter Wert des Drehmoments ($M_r$) aus einer radialen Lagerkraft ($F_r$), gebildet werden, wobei die axiale Lagerkraft ($F_a$) und die radiale Lagerkraft ($F_r$) von dem Lager (1) aufgenommen und durch das Drehmoment (M) hervorgerufen werden.

**12.** Verfahren nach Anspruch 11, wobei die axiale Lagerkraft ($F_a$) anhand eines Lagermodells (10.1) aus einem den Abstand zwischen dem Sensor (6.1) und der entsprechenden Maßverkörperung des zweiten Lagerrings (5) in der axialen Raumrichtung charakterisierenden Wert gebildet wird.

**13.** Verfahren nach Anspruch 11 oder 12, wobei die radiale Lagerkraft ($F_r$) anhand eines Lagermodells (10.2) aus einem den Abstand zwischen dem Sensor (6.2) und der entsprechenden Maßverkörperung des zweiten Lagerrings (5) in der radialen Raumrichtung charakterisierenden Wert gebildet wird.

**14.** Verfahren nach Anspruch 11, 12 oder 13, wobei, insbesondere zur Fehlerdetektion eine Abweichung zwischen dem ersten und dem zweiten Drehmomentwert ($M_a$, $M_r$) bestimmt wird, wobei insbesondere ein Fehler erkannt wird, wenn die Abweichung zwischen dem ersten und dem zweiten Drehmomentwert ($M_a$, $M_r$) über einem vorgegebenen, vorzugsweise betriebszustandsabhängigen Schwellwert liegt.

**15.** Verfahren nach einem der Ansprüche 11 bis 14, welches bei einem eine, insbesondere elektrifizierte Antriebsanordnung aufweisenden Fahrzeug verwendet wird, wobei das Lager (1) ein Teil der Antriebsanordnung ist und eine Getriebewelle (2) der Antriebsanordnung den zweiten Lagerring (5) aufnimmt, und wobei ein resultierendes Antriebsdrehmoment (M) durch eine, insbesondere betriebszustandsabhängige gewichtete Mittelwertbildung des ersten und zweiten Drehmomentwerts ($M_a$, $M_r$) bestimmt wird.

**16.** Verfahren nach einem der Ansprüche 1 bis 15, wobei wenigstens einer der Sensoren (6.1,6.2) als Magnetsensor (6.1, 6.2) ausgeführt ist, und/oder wobei wenigstens eine der Maßverkörperungen als Multipolmagnetring ausgebildet ist, welcher umlaufend alternierende magnetische Bereiche aufweist.

**17.** System zur Bestimmung von Positionsverlagerungen in wenigstens zwei unterschiedlichen Raumrichtungen zwischen einem ersten Element (3) und einem zweiten Element (5), welche relativ zueinander beweglich sind, mit wenigstens zwei berührungslos messenden Sensoren (6.1,6.2), welche in den wenigstens zwei unterschiedlichen Raumrichtungen zu wenigstens zwei mit dem zweiten Element (5) fest verbundenen Maßverkörperungen beabstandet angeordnet sind, wobei Sensorflächen der wenigstens zwei Sensoren (6.1,6.2) den wenigstens zwei Maßverkörperungen in der jeweiligen Raumrichtung gegenüberliegen und diese erfassen, wobei die wenigstens zwei Maßverkörperungen derart ausgelegt sind, dass sie in Verbindung miteinander Mittel zur Bestimmung der absoluten Position des zweiten Elements (5) bilden, wobei:

- die wenigstens zwei Sensoren (6.1,6.2) dazu eingerichtet sind, die wenigstens zwei Maßverkörperungen abzutasten und in Wechselwirkung mit den wenigstens zwei Maßverkörperungen Ausgangssignale zu erzeugen, mit welchen in Kombination eine absolute Position des zweiten Elements (5) bestimmbar ist, und wobei
- eine elektronische Steuerungseinrichtung vorhanden ist, welche mit den wenigstens zwei Sensoren (6.1,6.2) kommunikationsverbunden ist, welche deren Ausgangssignale als Eingangssignale erhält, und welche dazu eingerichtet ist, ein Verfahren nach einem der Ansprüche 1 bis 16 durchzuführen.

**Claims**

**1.** A method for determining shifts in position in at least two different spatial directions between a first element (3) and a second element (5), which are movable relative to one another, having at least two contactlessly measuring sensors (6.1,6.2), which are arranged spaced apart in the at least two different spatial directions from at least two standards fixedly connected to the second element (5), wherein sensor surfaces of the at least two sensors (6.1,6.2) are opposite to the at least two standards in the respective spatial direction and register them, wherein:

- the at least two sensors (6.1,6.2) scan the at least two standards and generate output signals in interaction with the at least two standards, using which in combination an absolute position of the second element (5) is determined, which is connected to a linear movement in a further spatial direction or to a rotational movement, and
- wherein furthermore by means of the output signals of the at least two sensors (6.1,6.2), values are determined which characterize the distance between the respective sensor (6.1,6.2) and the corresponding standard of the second element (5) in the associated spatial direction, which are corrected as a function of the ascertained absolute position ($\varphi$) of the second element (5), and from which the shift in position of the second element (5) relative to the first element (3) in the respective spatial direction is determined.

**2.** The method as claimed in claim 1, wherein the values characterizing the distance between the respective sensor (6.1,6.2) and the corresponding standard of the second element (5) in the associated spatial direction are determined by an amplitude of the output signal of the respective sensor (6.1,6.2).

3. The method as claimed in claim 1 or 2, wherein the at least two standards are designed in such a way that, in combination with one another, they form means for determining the absolute position of the second element.

4. The method as claimed in claim 1, 2, or 3, wherein the at least two standards, in combination with one another, form a binary pattern, a gray pattern, a pseudorandom code, in particular having an additional incremental track for fine interpolation, or a Nonius track.

5. The method as claimed in any one of claims 1 to 4, wherein the at least two sensors (6.1,6.2) are connected to the first element (3) and/or to a fixed structure.

6. The method as claimed in any one of claims 1 to 5, wherein forces and/or torques which act between the first element (3) and the second element (5) are determined from the ascertained shifts in position of the second element (5) relative to the first element (3).

7. The method as claimed in any one of claims 1 to 6, wherein redundant values of torques, the effects of which induce the shifts in position, or further external forces, which act on the second element (5), are ascertained in each case from the ascertained shifts in position of the second element (5) relative to the first element (3) in the at least two different spatial directions, wherein preferably a resulting torque is formed, in particular by preferably weighted averaging, from the redundantly ascertained torque values.

8. The method as claimed in any one of claims 1 to 7, which is used in a bearing, in particular a roller bearing (1), wherein a preferably fixed first bearing ring (3) of the bearing is used as the first element and a second bearing ring (5) of the bearing rotatably arranged relative to the first bearing ring (3) around a longitudinal axis is used as the second element, wherein preferably an absolute torsion angle ($\varphi$) of the second bearing ring (5) is used as the ascertained absolute position of the second element (5).

9. The method as claimed in claim 8, wherein a radial direction is used as a first spatial direction and an axial direction in relation to the longitudinal axis of the second bearing ring (5) is used as a second spatial direction.

10. The method as claimed in claim 8 or 9, wherein a current operating bearing play and/or mass forces as a result of accelerations are taken into consideration in the determination of the forces which act between the first bearing ring (3) and the second bearing ring (5) and/or the torques, the effects of which induce the forces.

11. The method as claimed in any one of claims 8 to 10, wherein a first value of a torque ($M_a$), which acts on the bearing (1), is formed from an axial bearing force ($F_a$), and a second value of the torque ($M_r$) is formed from a radial bearing force ($F_r$), wherein the axial bearing force ($F_a$) and the radial bearing force ($F_r$) are absorbed by the bearing (1) and induced by the torque (M).

12. The method as claimed in claim 11, wherein the axial bearing force ($F_a$) is formed on the basis of a bearing model (10.1) from a value characterizing the distance between the sensor (6.1) and the corresponding standard of the second bearing ring (5) in the axial spatial direction.

13. The method as claimed in claim 11 or 12, wherein the radial bearing force ($F_r$) is formed on the basis of a bearing model (10.2) from a value characterizing the distance between the sensor (6.2) and the corresponding standard of the second bearing ring (5) in the radial spatial direction.

14. The method as claimed in claim 11, 12, or 13, wherein, in particular for error detection, a deviation is determined between the first and the second torque value ($M_a$, $M_r$), wherein in particular an error is recognized if the deviation between the first and the second torque value ($M_a$, $M_r$) is above a predefined threshold value preferably dependent on the operating state.

15. The method as claimed in any one of claims 11 to 14, which is used in a vehicle, in particular having an electrified drive arrangement, wherein the bearing (1) is a part of the drive arrangement and a transmission shaft (2) of the drive arrangement accommodates the second bearing ring (5), and wherein a resulting drive torque (M) is determined by weighted averaging, in particular dependent on the operating state, of the first and second torque value ($M_a$, $M_r$).

16. The method as claimed in any one of claims 1 to 15, wherein at least one of the sensors (6.1,6.2) is embodied as a magnetic sensor (6.1, 6.2) and/or wherein at least one of the standards is formed as a multipolar magnetic ring, which circumferentially has alternating magnetic regions.

17. A system for determining shifts in position in at least two different spatial directions between a first element (3) and a second element (5), which are movable relative to one another, having at least two contactlessly measuring sensors (6.1,6.2), which are arranged spaced apart in the at least two different spatial directions from at least two standards fixedly connected to the second element (5), wherein sensor surfaces of the at least two sensors (6.1,6.2) are opposite to the at least two standards in the respective spatial direction and register them, wherein the at least two standards are designed in such a way that in combination with one another, they form means for determining the absolute position of the second element (5), wherein:

- the at least two sensors (6.1,6.2) are configured to scan the at least two standards and generate output signals in interaction with the at least two standards, using which in combination an absolute position of the second element (5) is determinable, and wherein
- an electronic control unit is provided, which has a communication connection to the at least two sensors (6.1,6.2), which receives their output signals as input signals, and which is configured to carry out a method as claimed in any one of claims 1 to 16.

## Revendications

1. Procédé pour déterminer des décalages de position dans au moins deux directions spatiales différentes entre un premier élément (3) et un second élément (5) qui sont mobiles l'un par rapport à l'autre, comprenant au moins deux capteurs de mesure sans contact (6.1, 6.2) qui sont agencés dans lesdites au moins deux directions spatiales différentes à distance d'au moins deux étalons de mesure reliés de façon fixe au second élément (5), dans lequel des surfaces de capteur desdits au moins deux capteurs (6.1, 6.2) sont situées en face desdits au moins deux étalons de mesure dans la direction spatiale respective et détectent ceux-ci, et dans lequel :

- lesdits au moins deux capteurs (6.1, 6.2) balayent lesdits au moins deux étalons de mesure et génèrent, en interaction avec lesdits au moins deux étalons de mesure, des signaux de sortie sur la base desquels, en combinaison, une position absolue du second élément (5) est déterminée, dans lequel ladite position absolue est liée à un déplacement linéaire dans une autre direction spatiale ou à un mouvement de rotation, et
- dans lequel, en outre, des valeurs qui caractérisent la distance entre le capteur respectif (6.1, 6.2) et l'étalon de mesure correspondant du second élément (5) dans la direction spatiale associée sont déterminées sur la base des signaux de sortie desdits au moins deux capteurs (6.1, 6.2),, dans lequel lesdites valeurs sont corrigées en fonction de la position absolue déterminée ($\varphi$) du second élément (5), et dans lequel le décalage de position du second élément (5) par rapport au premier élément (3) dans la direction spatiale respective est déterminé sur la base desdites valeurs.

2. Procédé selon la revendication 1, dans lequel les valeurs qui caractérisent la distance entre le capteur respectif (6.1, 6.2) et l'étalon de mesure correspondant du second élément (5) dans la direction spatiale associée sont déterminées par une amplitude du signal de sortie du capteur respectif (6.1, 6.2).

3. Procédé selon la revendication 1 ou 2, dans lequel lesdits au moins deux étalons de mesure sont agencés de telle sorte qu'ils forment, en combinaison l'un avec l'autre, des moyens de détermination de la position absolue du second élément (5).

4. Procédé selon la revendication 1, 2 ou 3, dans lequel lesdits au moins deux étalons de mesure forment en combinaison l'un avec l'autre un motif binaire, un motif de Gray, un code pseudo-aléatoire, en particulier avec une piste incrémentale supplémentaire pour une interpolation fine, ou une piste de vernier.

5. Procédé selon l'une quelconque des revendications 1 à 4, dans lequel lesdits au moins deux capteurs (6.1, 6.2) sont reliés au premier élément (3) et/ou à une structure fixe.

6. Procédé selon l'une quelconque des revendications 1 à 5, dans lequel des forces et/ou des couples qui agissent entre le premier élément (3) et le second élément (5) sont déterminé(e)s sur la base des décalages de position déterminés du second élément (5) par rapport au premier élément (3) .

**7.** Procédé selon l'une quelconque des revendications 1 à 6, dans lequel des valeurs de couples dont les effets entraînent les décalages de position ou d'autres forces externes qui agissent sur le second élément (5) sont déterminées chaque fois de façon redondante sur la base des décalages de position déterminés du second élément (5) par rapport au premier élément (3) dans lesdites au moins deux directions spatiales différentes, dans lequel un couple résultant est de préférence formé, en particulier en établissant une moyenne de préférence pondérée à partir des valeurs de couple déterminées de façon redondante.

**8.** Procédé selon l'une quelconque des revendications 1 à 7, utilisé pour un palier, en particulier un palier à roulement (1), dans lequel une première bague de palier (3), de préférence fixe, du palier est utilisée comme premier élément, et une seconde bague de palier (5) du palier est utilisée comme second élément et est agencée de manière à pouvoir tourner par rapport à la première bague de palier (3) autour d'un axe longitudinal, dans lequel un angle de rotation absolu ($\varphi$) de la seconde bague de palier (5) est de préférence utilisé comme position absolue déterminée du second élément (5).

**9.** Procédé selon la revendication 8, dans lequel une direction radiale est utilisée pour la première direction spatiale et une direction axiale est utilisée pour la seconde direction spatiale par rapport à l'axe longitudinal de la seconde bague de palier (5).

**10.** Procédé selon l'une quelconque des revendications 8 ou 9, dans lequel un jeu de position de fonctionnement actuel du palier et/ou des forces d'inertie dues à des accélérations sont pris en compte lors de la détermination des forces qui agissent entre la première bague de palier (3) et la seconde bague de palier (5) et/ou des couples dont les effets génèrent les forces.

**11.** Procédé selon l'une quelconque des revendications 8 à 10, dans lequel une première valeur de couple ($M_a$) qui agit sur le palier (1) est établie à partir d'une force axiale de palier ($F_a$), et une second valeur de couple ($M_r$) est établie à partir d'une force radiale de palier ($F_r$), dans lequel la force axiale de palier ($F_a$) et la force radiale de palier ($F_r$) sont absorbées par le palier (1) et générées par le couple (M).

**12.** Procédé selon la revendication 11, dans lequel la force axiale de palier ($F_a$) est générée à l'aide d'un modèle de palier (10.1) à partir d'une valeur qui caractérise la distance entre le capteur (6.1) et l'étalon de mesure correspondant de la seconde bague de palier (5) dans la direction spatiale axiale.

**13.** Procédé selon la revendication 11 ou 12, dans lequel la force radiale de palier ($F_r$) est générée à l'aide d'un modèle de palier (10.2) à partir d'une valeur qui caractérise la distance entre le capteur (6.2) et l'étalon de mesure correspondant de la seconde bague de palier (5) dans la direction spatiale radiale.

**14.** Procédé selon la revendication 11, 12 ou 13, dans lequel, en particulier pour la détection d'un défaut, un écart entre la première et la seconde valeurs de couple ($M_a$, $M_r$) est déterminé, dans lequel un défaut est en particulier détecté lorsque l'écart entre la première et la seconde valeurs de couple ($M_a$, $M_r$) est supérieur à une valeur de seuil prédéterminée, de préférence sur la base de l'état de fonctionnement.

**15.** Procédé selon l'une quelconque des revendications 11 à 14, utilisé pour un véhicule comportant un ensemble de transmission, en particulier électrifié, dans lequel le palier (1) fait partie de l'ensemble de transmission, et dans lequel un arbre de transmission (2) de l'ensemble de transmission reçoit la seconde bague de palier (5), et dans lequel un couple d'entraînement résultant (M) est déterminé en établissant une moyenne pondérée, en particulier sur la base de l'état de fonctionnement, des première et seconde valeurs de couple ($M_a$, $M_r$).

**16.** Procédé selon l'une quelconque des revendications 1 à 15, dans lequel au moins un desdits capteurs (6.1, 6.2) est conçu sous la forme d'un capteur cinétique (6.1, 6.2), et/ou dans lequel au moins un desdits étalons de mesure est conçu sous la forme d'un anneau magnétique multipolaire qui présente des régions magnétiques alternées sur sa circonférence.

**17.** Système pour déterminer des décalages de position dans au moins deux directions spatiales différentes entre un premier élément (3) et un second élément (5), qui sont mobiles l'un par rapport à l'autre, comprenant au moins deux capteurs de mesure sans contact (6.1, 6.2) qui sont agencés dans lesdites au moins deux directions spatiales différentes à distance d'au moins deux étalons de mesure reliés de façon fixe au second élément (5), dans lequel des surfaces de capteur desdits au moins deux capteurs (6. 1, 6.2) sont situées en face desdits au moins deux étalons de mesure dans la direction spatiale respective et détectent ceux-ci, dans lequel lesdits au moins deux étalons de mesure sont conçus de telle sorte qu'ils forment, en combinaison l'un avec l'autre, des moyens de détermination de la position absolue du second élément (5), et dans lequel :

- lesdits au moins deux capteurs (6.1, 6.2) sont conçus de manière à balayer lesdits au moins deux étalons de mesure et à générer, en interaction avec lesdits au moins deux étalons de mesure, des signaux de sortie sur la base desquels, en combinaison, une position absolue du second élément (5) peut être déterminée, et dans lequel
- il est prévu un dispositif de commande électronique qui est relié en communication avec lesdits au moins deux capteurs (6.1, 6.2) et qui reçoit les signaux de sortie de ceux-ci en tant que signaux d'entrée, et qui est conçu de manière à mettre en oeuvre un procédé selon l'une quelconque des revendications 1 à 16.

Fig. 1

Fig. 2a

Fig. 2b

Stirnschnitt
S - S

11

11.1

$F_{Z,t}$

C

$\alpha_t$

$F_{Z,bt}$

$F_{Z,r}$

8.1

8

8.1

8

M

$\beta$

$F_{Z,a}$

$F_{Z,t}$

C

S

S

$\beta$

8.1

8

Fig. 3

Fig. 4

**IN DER BESCHREIBUNG AUFGEFÜHRTE DOKUMENTE**

**In der Beschreibung aufgeführte Patentdokumente**

- DE 102016116113 A1
- DE 112015005624 T5
- DE 112015005624
- DE 102012215081 A1
- US 10274342 B2
- EP 1526362 A1